# EUROPÄISCHE PATENTSCHRIFT

(11) **EP 1 430 693 B1**
(45) Veröffentlichungstag und Bekanntmachung des Hinweises auf die Patenterteilung: **21.12.2005**
(21) Anmeldenummer: 02799391.4
(22) Anmeldetag: 10.09.2002
(51) Int. Cl.: H04L 29/06

(54) **VERFAHREN UND VORRICHTUNG ZUR REALISIERUNG EINER FIREWALLANWENDUNG FÜR KOMMUNIKATIONSDATEN**
METHOD AND DEVICE FOR IMPLEMENTATION OF A FIREWALL APPLICATION FOR COMMUNICATION DATA
PROCEDE ET DISPOSITIF DE MISE EN OEUVRE D'UNE APPLICATION DE PARE-FEU POUR DES DONNEES DE COMMUNICATION

(30) Priorität: 25.09.2001 DE 10147147
(43) Veröffentlichungstag der Anmeldung: 23.06.2004
(73) Patentinhaber: SIEMENS AKTIENGESELLSCHAFT, 80333 München (DE)
(72) Erfinder: VOLKMANN, Gerald, 81825 München (DE); TOTZKE, Jürgen, 85586 Poing (DE); MÜLLER, Harald, 82205 Gilching (DE); KLAGHOFER, Karl, 81373 München (DE)
(86) Internationale Anmeldenummer: PCT/DE2002/003351
(87) Internationale Veröffentlichungsnummer: WO 2003/028334

(56) Entgegenhaltungen:
- EP-A- 0 964 560
- US-B1- 6 195 366
- US-B1- 6 212 192
- WIETFELD C ET AL: "Seamless IP-based service integration across fixed/mobile and corporate/public networks" VEHICULAR TECHNOLOGY CONFERENCE, 1999 IEEE 49TH HOUSTON, TX, USA 16-20 MAY 1999, PISCATAWAY, NJ, USA,IEEE, US, 16. Mai 1999 (1999-05-16), Seiten 1930-1934, XP010342223 ISBN: 0-7803-5565-2

## Beschreibung

Die Erfindung betrifft ein Verfahren zur Realisierung einer Firewallanwendung für zwischen Endgeräten übertragenen Kommunikationsdaten gemäß dem Oberbegriff des Patentanspruches 1 und eine Anordnung zur Durchführung des Verfahrens.

Verfahren zur Sicherheitsüberprüfung von übertragenen Kommunikationsdaten werden oft als "Firewall" bezeichnet. Hierbei handelt es sich um Verfahren und Einrichtungen, die die Verhinderung unerlaubten Zugriffs auf Daten und insbesondere die Verhinderung des Einschleppens von Computerviren zum Ziel haben.

Firewalls werden häufig an Netzgrenzen zweier aneinander angrenzender Kommunikationsnetze eingesetzt, um von vornherein das Eindringen von Computerviren beispielsweise in ein privates Kommunikationsnetz vom Typ "LAN (Local Area Network) auszuschließen. Derartige Firewalls weisen den Nachteil auf, daß sie Kommunikationsdaten, die im Rahmen der Internet-Telefonie, basierend auf dem Voice-Over-IP-Prinzip, zwischen zwei in verschiedenen Kommunikationsnetzen angeordneten Endgeräten übertragen werden, aufgrund einer dynamisch vergebenen Adresse der beteiligten Endgeräte nicht verarbeiten können. Demzufolge werden die übertragenen Kommunikationsdaten in ihrem Inhalt nicht zuverlässig auf das Vorhandensein von Computerviren geprüft.

Bei der Internet-Telefonie werden IP-Adressen von den Internet-Service-Providern (ISP) nur temporär, also dynamisch, zugeteilt, weshalb vor der Herstellung einer Verbindung über das Internet erst die IP-Adressen ausgetauscht werden müssen. Eine zwischen den Kommunikationsnetzen angeordnete Firewall-Einrichtung ist jedoch in der Regel für das Erkennen von statischen IP-Adressen, also sich temporär nicht verändernden Adressen, ausgelegt.

Um das Erkennen, Übertragen und Weiterverarbeiten von Video- und Audiodaten im Rahmen einer Internet-Telefonie oder einer Multimedia-Konferenz über das Internet zu ermöglichen, wurden internationale Standards, nämlich der H.323 oder der SIP-Standard geschaffen. Dieser Standard nutzt die aus dem Internet bekannten Protokolle, wie UDP (User Data Protocol) und RTP (Real-Time Protocol). Diese Protokolle dienen zum Transport von Datagrammen, mittels welcher die Audio- und Videodaten im Internet übertragen werden.

In diesem Standard ist unter anderem festgelegt, daß auf Voice-Over-IP basierende Telefonanrufe aus mehreren Verbindungen, nämlich der Signalisierungs-, Kontrollprotokoll- und Nutzdatenverbindung, bestehen können. Für diese Verbindungen müssen die Port-Nummern, die nur für die Zeitdauer eines einzelnen Anrufs gelten können, für jeden weiteren Anruf neu bestimmt werden. Diese dynamisch bestimmten Port-Nummern ergeben weitere Probleme in der Bearbeitung der Daten durch die Firewall-Einrichtung, die in der Regel auf das Erkennen von statisch bestimmten Port-Nummern ausgerichtet ist.

Aus der Patentschrift US 6,212,192 B1 ist ein Verfahren zur synchronen Informationsverteilung in einem Kommunikationssystem von einem Server zu mehreren sogenannten Client-Systemen bekannt, wobei das Kommunikationssystem eine Firewall enthalten kann. Dabei werden in der Patentschrift Verfahrensschritte offenbart, mit denen erkannt werden kann, ob sich ein Client-System hinter einer Firewall befindet.

Aus Patentschrift US 6,195,366 B1 ist weiterhin ein Verfahren zum Austausch von Port-Nummern zwischen Rechnern bekannt, die über Firewalls verbunden sind. Dabei zielt das Verfahren hauptsächlich auf Konfigurationen mit vielen Firewalls zwischen den Rechnern ab.

Bekannt ist weiterhin aus Patentschrift EP 0 964 560 A1 ein Verfahren zum Aufbauen von Multimedia-Verbindungen zu einem Benutzer, der sich in einem fremden Netzwerk befindet, wobei in den Verfahrensschritten Meldungen zwischen Endgeräten und sogenannten Gatekeepern offenbart werden.

Weiter sind aus der Druckschrift "Seamless IP-based Service Integration across Fixed/Mobile and Corporate/Public Networks" von Christian Wietfeld und Ulrich Gremmelmaier aus IEEE, Vehicular Technology Conference, Houston, TX, USA, datiert vom Mai 1999, Seiten 1930-1934 Probleme beim sogenannten "Mobile IP" im Zusammenhang mit Firewalls bekannt. Dabei werden jedoch keine Lösungswege aufgezeigt, wie Firewalls integriert werden können.

In allen der oben genannten Druchschriften wird jedoch auf die Problematik von dynamisch bestimmten Port-Nummern nicht eingegangen.

Der vorliegenden Erfindung liegt die Aufgabe zugrunde, ein Verfahren zur Realisierung einer Firewallanwendung für zwischen Kommunikationsnetzen übertragenen Kommunikationsdaten auch für die Internet-Telefonie und Internet-Multimedia-Verbindungen, insbesondere bei dynamisch bestimmten Adressen, zur Verfügung zu stellen. Es ist weiterhin Aufgabe der vorliegenden Erfindung eine Anordnung zur Durchführung des Verfahrens anzugeben.

Diese Aufgabe wird verfahrensseitig gemäß den Merkmalen des Patentanspruches 1 und vorrichtungsseitig gemäß den Merkmalen des Patentanspruches 9 gelöst.

Ein wesentlicher Punkt der Erfindung liegt darin, daß mittels eines sogenannten Look-Ahead-Mechanismus vor dem eigentlichen Verbindungsaufbau zwischen zwei Endgeräten eine Sicherheitsüberprüfung durch eine Netzübergangseinrichtung stattfindet, deren IP-Adresse bekannt ist, um anschließend nach erfolgreicher Überprüfung eine Firewall-Einrichtung für den Verbindungsaufbau freizuschalten. Hierfür werden in einem ersten Schritt der Initiierung einer Verbindung von dem ersten zu dem zweiten Endgerät Authentifizierungsdaten zur Authentifizierung des ersten Endgerätes über eine erste Netzübergangseinrichtung zu einer zweiten Netzübergangseinrichtung, die in dem zweiten Kommunikationsnetz angeordnet ist, gesendet. In einem zweiten Schritt schaltet die Netzübergangseinrichtung nach erfolgter Authentifizierung des ersten Endgerätes die Firewall-Einrichtung für eine ausgewählte weitere IP-Adresse der Signalisierungsdaten des authentifizierten Endgerätes oder eines Gatekeepers frei.

Auf diese Weise kann die Firewall-Einrichtung auch zeitlich befristet vergebene IP-Adressen für den Aufbau einer Multimedia-Verbindung oder einer Internet-Telefon-Verbindung erkennen. Eine Sicherheitsüberprüfung der für diese Verbindungen übertragenen Daten ist somit durch eine sich ständig neu einstellende Firewall-Einrichtung möglich. Zudem kann die Firewall-Einrichtung neben der Abstimmung auf eine neue IP-Adresse auch auf neue Port-Nummern eingestellt und freigeschaltet werden.

Für den sich anschließenden Verbindungsaufbau wird in einem Schritt des Sendens einer Nachricht von der zweiten an die erste Netzübergangseinrichtung die neue Adresse zum-Senden von Signalisierungsdaten mitgeteilt. Die erste Netzübergangseinrichtung teilt die neue Adresse dann einem ersten Gatekeeper mit.

Anschließend kann von dem ersten Endgerät über einen ersten Gatekeeper und die Firewall-Einrichtung der zweiten Netzübergangseinrichtung ein Verbindungsaufbauwunsch signalisiert werden. Die Signalisierungsdaten werden von der Firewall-Einrichtung auf Viren überprüft und bei virenfreiem Zustand an das zweite Endgerät weitergeleitet. Nach erfolgter Abstimmung zwischen den beiden Endgeräten und einer Bestätigungsnachricht von dem zweiten zu dem ersten Endgerät für die Entgegennahme des Gesprächs wird von der zweiten Netzübergangseinrichtung zu der Firewall-Einrichtung eine Freischaltenachricht zum Freischalten der Firewall-Einrichtung für Nutzdaten des ersten und zweiten Endgerätes gesendet. Auf diese Weise werden die entsprechenden Port-Nummern an der Firewall-Einrichtung für das Übertragen von Nutzdaten, wie beispielsweise Sprachdaten, freigeschaltet.

Eine dynamische Anpassung der Firewall-Einrichtung an das einzelne Gespräch ist auch bei dem Sich-Einstellen auf neue Port-Nummern gegeben.

Vorteilhaft wird in einer Anordnung zur Durchführung des Verfahrens mit der Firewall-Einrichtung, dem ersten und zweiten Endgerät und der ersten Netzübergangseinrichtung, eine zweite Netzübergangseinrichtung angeordnet mit bekannter Adresse zur Durchführung einer Authentifizierung anhand von dem ersten Endgerät übermittelten Authentifizierungsdaten und zum Senden einer gewählten weiteren Adresse des ersten Endgerätes an die Firewall-Einrichtung zum Freischalten derjenigen für die vom ersten zu dem zweiten Endgerät zu sendenden Signalisierungsdaten.

Die Anordnung weist zudem, vorzugsweise in der zweiten Netzübergangseinrichtung, eine Freischalteinrichtung zum Freischalten der Firewall-Einrichtung für Signalisierungsdaten und/oder Nutzdaten auf. Nach dem Freischalten der für die Signalisierungsdaten zuständigen Ports werden die für die Nutzdaten zuständigen Ports freigeschaltet.

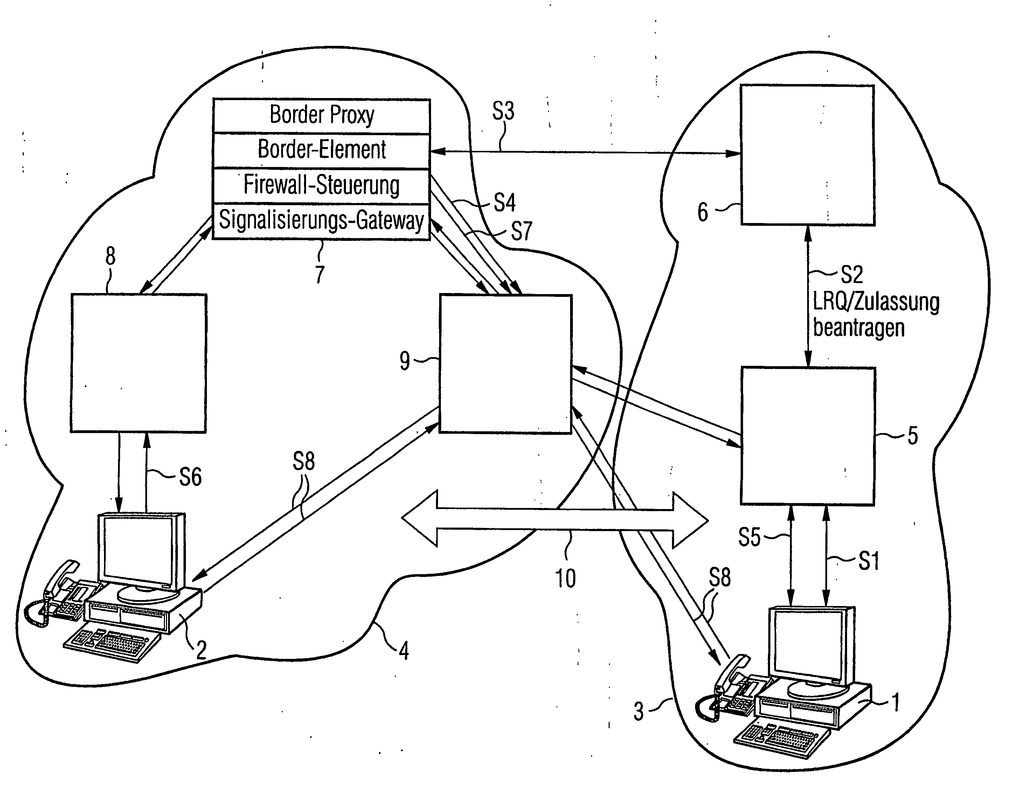

Weitere vorteilhafte Ausführungsformen ergeben sich aus den Unteransprüchen. Zudem können Vorteile und Zweckmäßigkeiten aus der nachfolgenden Beschreibung in Verbindung mit der Figur entnommen werden. Diese zeigt eine schematische Darstellung einer Ausführungsform des erfindungsgemäßen Verfahrens mit Vorrichtungsaspekten.

Die in der Figur gezeigte Ausführungsform zeigt schematisch unter Heranziehung einzelner Vorriclitungsaspekte ein Internet-Telefongespräch, basierend auf dem Voice-Over-IP-Prinzip, zwischen zwei Kommunikationsnetzen, in denen je ein Endgerät angeordnet ist. Der Teilnehmer eines ersten Endgerätes 1 möchte mit dem Teilnehmer eines zweiten Endgerätes 2 ein Internet-Telefongespräch führen. Das erste Endgerät 1 ist in einem ersten Kommunikationsnetz 3, das ein Voice-Over-IP-Carrier-Netz 3 darstellt, angeordnet, während das zweite Endgerät 2 in einem Local Area Network (LAN) 4 angeordnet ist.

In den Schritten S1, S2 und S3 wird ein Verbindungsaufbauwunsch von dem ersten Endgerät 1 über einen Gatekeeper 5 und einer ersten Netzübergangseinrichtung 6 zur Initiierung einer Verbindung an eine zweite Netzübergangseinrichtung 7 gesendet. Ein derartiger Look Ahead Mechanismus zwischen dem ersten Endgerät 1, dem ersten Gatekeeper 5 und der ersten Netzübergangseinrichtung 6 in dem ersten Kommunikationsnetz 3 auf der einen Seite und der zweiten Netzübergangseinrichtung 7 in dem zweiten Kommunikationsnetz 4 auf der anderen Seite erfolgt in einem H.225.0 Annex G-Standard, dessen dazugehöriges Protokoll die bekannten Port-Nummern berücksichtigt.

Während dieses Zeitabschnitts der Initiierung einer Verbindung werden von dem ersten Endgerät mit oder ohne Aufforderung Authentifizierungsdaten zur Authentifizierung des ersten Endgerätes an die zweite Netzübergangseinrichtung 7 gesendet, um so eine Überprüfung des von außerhalb des LAN anrufenden Teilnehmers, welcher das erste Endgerät verwendet, zu ermöglichen. Der Ausschluß nicht zugelassener anrufender Endgeräte wird hierbei nach verschiedenen vorab gespeicherten Kriterien durchgeführt.

Sofern die Identität des anrufenden Endgerätes festgestellt werden konnte und dessen Zulassung für ein Internet-Gespräch mit Einrichtungen innerhalb des zweiten Kommunikationsnetzes 4 vorliegt, wird in Schritt S4 von der Netzübergangseinrichtung 7 zu einer Firewall-Einrichtung 9 eine Nachricht mit einer zweiten Adresse der Signalisierungsdaten des ersten Endgerätes oder des ersten Gatekeepers 5 gesendet, um die Firewall-Einrichtung 9 für diese neu vergebende Adresse freizuschalten. Das Senden einer derartigen Nachricht wird durch in der zweiten Netzübergangseinrichtung 7 angeordnetes Firewall Control Interface (FCI) initiiert.

Nach erfolgreicher Authentifizierung wird von der zweiten Netzübergangseinrichtung 7 eine Zugangsbestätigungsnachricht (Access Confirm Nachricht) mittels des H.225.0 Annex G Protokolls an die erste Netzübergangseinrichtung 6 und weiter an den ersten Gatekeeper 5 gesendet, mit welcher die IP-Adresse beispielsweise der zweiten Netzübergangseinrichtung 7 und die dem zukünftigen Gespräch zugeordneten Port-Nummern mitgeteilt werden. Das Senden einer derartigen Zugangsbestätigungsnachricht von der zweiten an die erste Netzübergangseinrichtung 6 kann ebenso vor dem Schritt des Sendens der Nachricht von der zweiten Netzübergangseinrichtung 7 an die Firewall-Einrichtung 9, mittels welcher die neu vergebene Adresse der Firewall-Einrichtung mitgeteilt wird, geschehen.

In dem sich anschließenden Schritt S5 wird der eigentliche Gesprächsaufbau von dem ersten zu dem zweiten Endgerät über den ersten Gatekeeper 5, die Firewall-Einrichtung 9, die Netzübergangseinrichtung 7 und den zweiten Gatekeeper 8. durchgeführt. Hierfür wird eine SETUP-Nachricht von dem ersten Endgerät 1 zu dem zweiten Endgerät 2 im H.225.0-Standard gesendet. Die SETUP-Nachricht wird über ein Signalisierungs-Gateway, welches als Funktion innerhalb der zweiten Netzübergangseinrichtung (Border Proxy) eingerichtet ist, geleitet, um eine Umsetzung der Signalisierungsdaten an die Erfordernisse des für die Daten neuen Kommunikationsnetzes 4 sicherzustellen. Diese SETUP-Nachricht kann die Firewall-Einrichtung 9 passieren, da in Schritt S4 die entsprechenden Ports freigeschaltet wurden.

In einem Schritt S6 wird eine Bestätigungsnachricht in Form einer ALERT-Nachricht für einen erfolgten Verbindungsaufbau mit dem zweiten Endgerät von diesem über die zweite Netzübergangseinrichtung 7, die Firewall-Einrichtung 9 und den Gatekeeper 5 an das erste Endgerät 1 gesendet. Das in der zweiten Netzübergangseinrichtung 7 angeordnete FCI sendet daraufhin in einem Schritt 7 ein Freischaltungssignal an die Firewall-Einrichtung 9, mittels dem sich die entsprechenden Port-Nummern für das Entgegennehmen von zukünftigen Nutzdaten (Sprachdaten) für das erste und zweite Endgerät öffnen. Nun können Sprachdaten von dem ersten Endgerät 1 zu dem zweiten Endgerät 2 über die Firewall-Einrichtung 9 übertragen werden (Schritt S8).

Die Übertragung der Authentifizierungsdaten in den Schritten S1-S3 kann auf einem PKI-Verschlüsselungsverfahren (PKI: Private/Public Key Interface) basieren, das ein sich Maskieren als ein anderer externer nicht zugelassener Benutzer nahezu unmöglich macht.

Alternativ zu dem verwendeten H.323 und H.225 Annex G-Protokollen können SIP-Protokolle für die Durchführung des erfindungsgemäßen Verfahrens verwendet werden. Hierbei wird die H.225.0 SETUP-Rufaufbaunachricht durch die Nachricht SIP-INVITE ersetzt. Auch ist jedes andere dafür geeignete Protokoll, insbesondere anstelle des H.225.0 Annex G-Protokoll denkbar.

Die Funktionen FCI und Überprüfung der Authentifizierungsdaten (Border Element) können innerhalb einer Netzübergangseinrichtung (Border Proxy) zusammen mit dem zweiten Gatekeeper 8 auf einem gemeinsamen Rechner oder unabhängig davon in separaten Einrichtungen angeordnet sein.

Das erfindungsgemäße Verfahren kann zwischen einem Privatnetz (LAN) und einem Carrier Netz, zwischen zwei Privatnetzen oder zwischen zwei Carrier Netzen durchgeführt werden. Neben der Internet-Telefonie ist auch die Anwendung auf Multimedia-Internet-Verbindungen denkbar.

Die Ausführung der Erfindung ist nicht auf das beschriebene Beispiel und oben hervorgehobene Aspekte beschränkt, sondern im Rahmen der Ansprüche ebenso in einer Vielzahl von Abwandlungen möglich, die im Rahmen fachgemäßen Handelns liegen.

## Patentansprüche

1. Verfahren zur Realisierung einer Firewallanwendung für zwischen einem ersten und zweiten Endgerät (1, 2) übertragene Kommunikationsdaten mittels einer zwischen einem ersten und zweiten Kommunikationsnetz (3, 4), insbesondere für die Internet-Telefonie oder für Internet-Multimedia-Verbindungen, angeordneten Firewall-Einrichtung (9), wobei das erste Endgerät (1) im ersten Kommunnikationsnetz (3) und das zweite Endgerät (2) im zweiten Kommunikationsnetz (4) angeordnet ist, wobei
in einem ersten Schritt (S1, S2, S3) der Initiierung einer Verbindung von dem ersten zu dem zweiten Endgerät (1, 2) Authentifizierungsdaten zur Authentifizierung des ersten Endgerätes (1) über eine erste an eine zweite Netzübergangseinrichtung (6, 7) mit bekannter Adresse gesendet werden, und
in einem zweiten Schritt (S4) die zweite Netzübergangseinrichtung (7) der Firewall-Einrichtung (9) nach erfolgter Authentifizierung des ersten Endgerätes (1) eine gewählte weitere Adresse des ersten Endgerätes (1) oder eines damit verbundenen ersten Gatekeepers (5) mitteilt, um die Firewall-Einrichtung (9) für vom ersten Endgerät (1) zu sendende Signalisierungsdaten freizuschalten.

2. Verfahren nach Anspruch 1;
**gekennzeichnet durch**
den weiteren Schritt des Sendens (S3) einer Nachricht mit der weiteren Adresse von der zweiten Netzübergangseinrichtung (7) an die erste Netzübergangseinrichtung (6).

3. Verfahren nach Anspruch 2,
**dadurch gekennzeichnet, daß**
die weitere Adresse aus einer IP-Adresse und einer Port-Nummer zusammengesetzt wird.

4. Verfahren nach Anspruch 2 oder 3,
**gekennzeichnet durch**
den Schritt (S5) des Gesprächsaufbaus von dem ersten zu dem zweiten Endgerät (1, 2) über den ersten Gatekeeper (5), die Firewall-Einrichtung (9), die zweite Netzübergangseinrichtung (7) und einen zweiten Gatekeeper (8).

5. Vefahren nach Anspruch 4,
**dadurch gekennzeichnet, daß**
der Gesprächsaufbau durch Senden (S5) einer SETUP-Nachricht oder einer SIP-INVITE-Nachricht durchgeführt wird.

6. Verfahren nach Anspruch 4 oder 5,
**dadurch gekennzeichnet, daß**
eine Bestätigungsnachricht, insbesondere ALERT-Nachricht zur Bestätigung der Entgegennahme des Gesprächsaufbaus mittels der gewählten weiteren Adresse von dem zweiten Endgerät (2) zu dem ersten Endgerät (1) gesendet (S6) wird.

7. Verfahren nach einem der vorangegangenen Ansprüche,
**gekennzeichnet durch**
den weiteren Schritt des Sendens einer Freischaltenachricht zum Freischalten der Firewall-Einrichtung (9) für Nutzdaten von der zweiten Netzübergangseinrichtung (7) zu der Firewall-Einrichtung (9).

8. Verfahren nach einem der vorangegangenen Ansprüche,
**dadurch gekennzeichnet, daß**
die Authentifizierungsdaten mittels PKI (Private/Public Key Interface) übertragen werden.

9. Anordnung zur Durchführung des Verfahrens nach einem der vorangegangenen Ansprüche, mit einer am Übergang von einem ersten zu einem zweiten Kommunikationsnetz (3, 4) angeordneten Firewall-Einrichtung (9),
einem in dem ersten Kommunikationsnetz (3) angeordneten ersten Endgerät (1) und einem in dem zweiten Kommunikationsnetz (4) angeordneten zweiten Endgerät (2), und
einer ersten, in dem ersten Kommunikationsnetz angeordneten ersten Netzübergangseinrichtung (6),
**gekennzeichnet durch**,
eine zweite Netzübergangseinrichtung (7) mit bekannter Adresse zur Durchführung einer Authentifizierung anhand von dem ersten Endgerät (1) übermittelten Authentifizierungsdaten und zum Senden einer gewählten weiteren Adresse des zweiten Endgerätes (2) an die Firewall-Einrichtung (9) zum Freischalten derselben für die vom ersten zu dem zweiten Endgerät (1, 2) zu sendenden Signalisierungsdaten.

10. Anordnung nach Anspruch 9,
**gekennzeichnet durch**
eine Freischalteinrichtung zum Freischalten der Firewall-Einrichtung (9) für Signalisierungsdaten und/oder Nutzdaten.

## Claims

1. Method for implementing a firewall application for communication data transmitted between a first and second terminal device (1, 2) by means of a firewall device (9) disposed between a first and second communication network (3, 4), in particular for Internet telephony or for Internet multimedia connections, the first terminal device (1) being disposed in the first communication network (3) and the second terminal device (2) being disposed in the second communication network (4),
wherein
in a first step (S1, S2, S3) for the purpose of initiating a connection from the first to the second terminal device (1, 2), authentication data for authenticating the first terminal device (1) is sent via a first to a second network interworking device (6, 7) with a known address, and in a second step (S4) the second network interworking device (7), following successful authentication of the first terminal device (1), communicates to the firewall device (9) a selected further address of the first terminal device (1) or a first gatekeeper (5) connected to it, in order to activate the firewall device (9) for signalling data to be sent by the first terminal device (1).

2. The method according to claim 1,
**characterized by**
the further step of the sending (S3) of a message containing the further address from the second network interworking device (7) to the first network interworking device (6).

3. The method according to claim 2,
**characterized in that**
the further address is composed of an IP address and a port number.

4. The method according to claim 2 or 3,
**characterized by**
the step (S5) of the call setup from the first to the second terminal device (1, 2) via the first gatekeeper (5), the firewall device (9), the second network interworking device (7) and a second gatekeeper (8).

5. The method according to claim 4,
**characterized in that**
the call setup is performed by the sending (S5) of a SETUP message or an SIP INVITE message.

6. The method according to claim 4 or 5,
**characterized in that**
a confirmation message, in particular an ALERT message to confirm the acceptance of the call setup, is sent (S6) by means of the selected further address from the second terminal device (2) to the first terminal device (1).

7. The method according to one of the preceding claims,
**characterized by**
the further step of the sending of an activation message to activate the firewall device (9) for user data from the second network interworking device (7) to the firewall device (9).

8. The method according to one of the preceding claims,
**characterized in that**
the authentication data is transmitted by means of PKI (Private/Public Key Interface).

9. An arrangement for performing the method according to one of the preceding claims, having a firewall device (9) disposed at the point of transition from a first to a second communication network (3, 4),
a first terminal device (1) disposed in the first communication network (3) and a second terminal device (2) disposed in the second communication network (4), and
a first network interworking device (6) disposed in the first communication network,
**characterized by**
a second network interworking device (7) with a known address for performing an authentication on the basis of authentication data transmitted by the first terminal device (1) and for sending a selected further address of the second terminal device (2) to the firewall device (9) for activating said firewall device (9) for the signalling data to be sent from the first to the second terminal device (1, 2) .

10. The arrangement according to claim 9,
**characterized by**
an activation device for activating the firewall device (9) for signalling data and/or user data.

## Revendications

1. Procédé pour réaliser une application firewall pour des données de communication transmises entre un premier et un deuxième terminal (1, 2) au moyen d'un équipement firewall (9) disposé entre un premier et un deuxième réseau de communication (3, 4), en particulier pour la téléphonie Internet ou pour des connexions Internet multimédia, le premier terminal (1) étant situé dans le premier réseau de communication (3) et le deuxième terminal (2), dans le deuxième réseau de communication (4),
des données d'authentification pour authentifier le premier terminal (1) étant envoyées, dans une première étape (S1, S2, S3) de l'initialisation d'une connexion allant du premier au deuxième terminal (1, 2), par l'intermédiaire d'un premier à un deuxième équipement de changement de réseau (6, 7) avec une adresse connue et, dans une deuxième étape (S4), le deuxième équipement de changement de réseau (7) de l'équipement firewall (9) communiquant, après que l'authentification du premier terminal (1) a eu lieu, une autre adresse choisie du premier terminal (1) ou d'un premier gatekeeper (5) qui y est relié, pour débloquer l'équipement firewall (9) pour des données de signalisation à émettre par le premier terminal (1).

2. Procédé selon la revendication 1,
**caractérisé par**
l'autre étape de l'émission (S3) d'un message avec l'autre adresse, du deuxième équipement de changement de réseau (7) au premier équipement de changement de réseau (6).

3. Procédé selon la revendication 2,
**caractérisé en ce que**
l'autre adresse se compose d'une adresse IP et d'un numéro de port.

4. Procédé selon la revendication 2 ou 3,
**caractérisé par**
l'étape (S5) de l'établissement de la communication du premier vers le deuxième terminal (1, 2) par l'intermédiaire du premier gatekeeper (5), de l'équipement firewall (9), du deuxième équipement de changement de réseau (7) et d'un deuxième gatekeeper (8).

5. Procédé selon la revendication 4,
**caractérisé en ce que**
l'établissement de la communication est effectué par l'émission (S5) d'un message SETUP ou d'un message SIP INVITE.

6. Procédé selon la revendication 4 ou 5,
**caractérisé en ce**
**qu'**un message de confirmation, en particulier un message ALERT pour confirmer la réception de l'établissement de la communication, est envoyé (S6) du deuxième terminal (2) au premier terminal (1) au moyen de l'autre adresse choisie.

7. Procédé selon l'une des revendications précédentes,
**caractérisé par**
l'autre étape de l'envoi, du deuxième équipement de changement de réseau (7) à l'équipement firewall (9), d'un message de déblocage pour débloquer l'équipement firewall (9) pour des données utiles.

8. Procédé selon l'une des revendications précédentes,
**caractérisé en ce que**
les données d'authentification sont transmises au moyen de la PKI (Private / Public Key Interface).

9. Ensemble permettant la mise en oeuvre du procédé selon l'une des revendications précédentes, comprenant un équipement firewall (9) situé au passage d'un premier à un deuxième réseau de communication (3, 4), un premier terminal (1) situé dans le premier réseau de communication (3) et un deuxième terminal (2) situé dans le deuxième réseau de communication (4) et un premier équipement de changement de réseau (6) situé dans le premier réseau de communication,
**caractérisé par**
un deuxième équipement de changement de réseau (7) avec une adresse connue pour l'exécution d'une authentification à l'aide de données d'authentification transmises par le premier terminal (1) et pour envoyer une autre adresse du deuxième terminal (2), qui a été choisie, à l'équipement firewall (9) pour débloquer celui-ci pour les données de signalisation à envoyer du premier au deuxième terminal (1, 2).

10. Ensemble selon la revendication 9,
**caractérisé par**
un équipement de déblocage pour débloquer l'équipement firewall (9) pour des données de signalisation et/ou des données utiles.
